# EUROPEAN PATENT SPECIFICATION

(11) **EP 2 586 683 B1**
(45) Date of publication and mention of the grant of the patent: **22.11.2017**
(21) Application number: 12187920.9
(22) Date of filing: 10.10.2012
(51) Int. Cl.: B62H 1/02

(54) **Motor driven vehicle**
Motorbetriebenes Fahrzeug
Véhicule à moteur

(30) Priority: 26.10.2011 JP 2011234928
(43) Date of publication of application: 01.05.2013
(73) Proprietor: Honda Motor Co., Ltd., Tokyo 107-8556 (JP)
(72) Inventor: Yamazaki, Takayuki, Saitama, 351-0193 (JP)
(74) Representative: Beder, Jens

(56) References cited:
- CN-U- 201 784 735
- FR-A1- 2 798 112
- JP-A- 2001 260 964
- JP-A- 2003 072 610
- US-A1- 2002 108 798

## Description

The present invention relates to improvements in a motor driven vehicle having a stand.

Motorcycles and some of motor-driven three-wheeled vehicle include a stand for supporting a vehicle body upon parking. Upon running, the stand is accommodated.

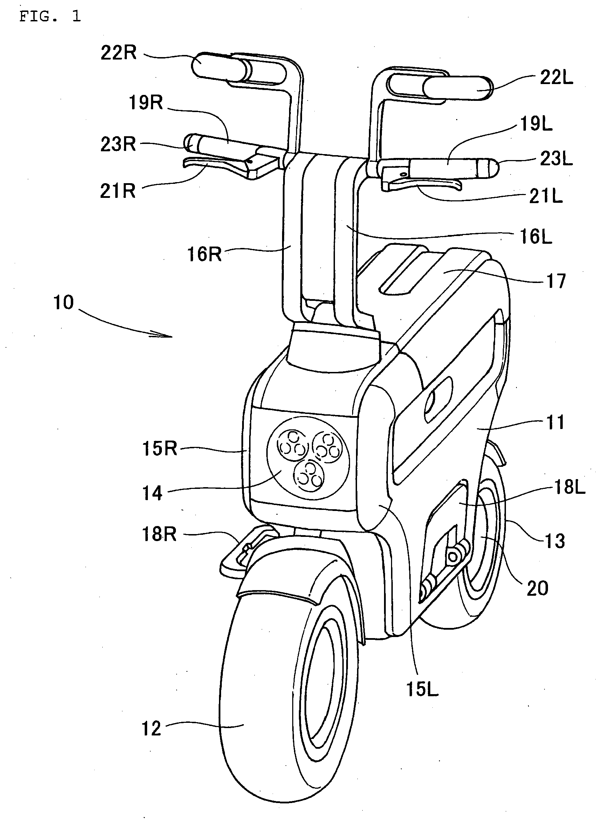

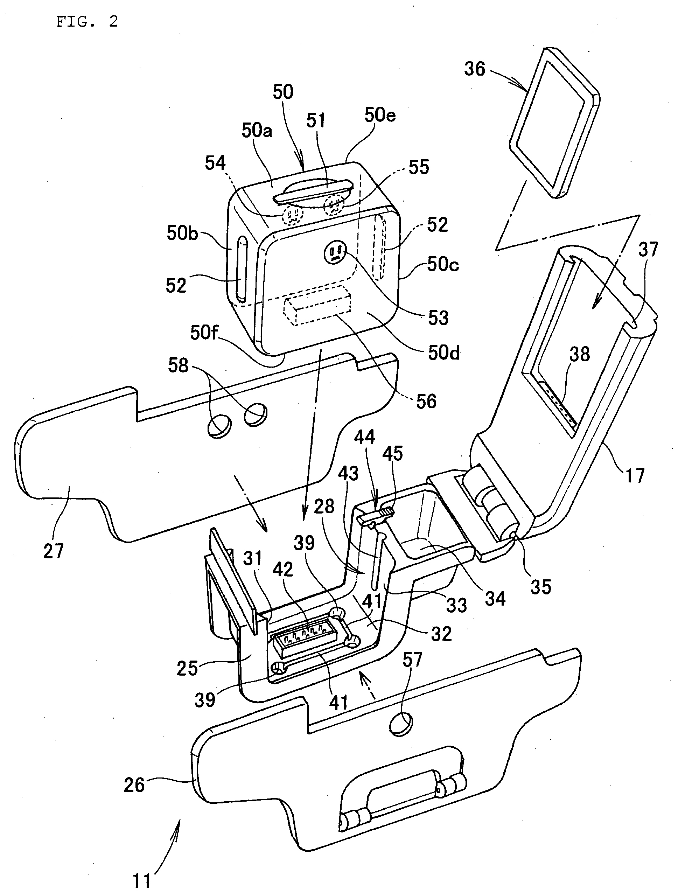

A stand structure for a motor-driven three-wheeled vehicle is known (refer to, for example, Japanese Patent Laid-Open No. 2001-29398 (figure 1, figure 2).

As shown in figure 2 of JP 2001-29398, upon parking, a stand (35) (a numeral in parentheses represents a reference character described in Patent Document 1. This applies also to the following description) is extended downwardly from a vehicle body (15) and contacts at a lower end thereof with the road surface to support the vehicle body (15).

Upon running, the stand (35) is accommodated such that it extends in parallel to a lower face of the vehicle body (15) below the vehicle body (15) as shown in figure 1 of Japanese Patent Laid-Open No. 2001-29398.

Since the stand (35) is positioned below the lower face of the vehicle body (15), it is likely to contact with a projection on the road. As a countermeasure, it is necessary to form the stand (35) thick and rigid.

Further, if this stand (35) is applied to a motorcycle having a small vehicle width, then the stand (35) can be seen from a side face of the vehicle and there is a room for improvement in terms of the outer appearance.

Therefore, a stand is demanded which is free from care of contact with a projection on the road and has an improved outer appearance. The document JP2003 072610 represents the closest prior art in accordance with the preamble of claim 1. It is an object of the present invention to provide a motor driven vehicle having a stand which is free from care of contact of a stand with a projection on the road and is good in outer appearance.

This object is achieved by a motor driven vehicle according to the enclosed independent claim 1. Advantageous features of the present invention are defined in the corresponding subclaims.

According to the invention, the recessed portion is provided on the bottom portion of the vehicle body, and the stand is removably accommodated in the recessed portion. Since the stand does not protrude from the vehicle body, the outer appearance of the vehicle is improved. Further, since the stand is accommodated in the vehicle body, there is no possibility that a projection on the road may contact with the stand. As a result, there is no necessity to make the stand thick and rigid, and reduction in diameter and weight of the stand can be anticipated.

Where the stand is accommodated in the vehicle body, it is structurally difficult to move the stand to its used position. In the present invention, the stand can be moved from the accommodated position to the used position by operating the unlocking operation element provided on the vehicle body.

According to the invention, the step accommodating recessed portion which is recessed toward the center of the vehicle body is provided on the side face of the vehicle body, and the step is removably accommodated in the step accommodating recessed portion. Further, the unlocking operation element is provided in the region in the step accommodating recessed portion which is hidden by the step in the accommodated state.

Since the unlocking operation element is disposed at a position at which it cannot be noticed readily, it becomes less likely to be operated by mischief.

In the invention as set forth in claim 2, the unlocking operation element is provided on the side face of the vehicle body. Where the unlocking operation element is provided on the side face of the vehicle body, it can be operated very readily.

In the invention as set forth in claim 3, the unlocking operation element is provided at the bottom portion of the vehicle body.

Since the unlocking operation element is disposed at a position at which it cannot be noticed readily, it becomes less likely to be operated by mischief.

In the invention as set forth in claim 4, the recessed portion which is recessed toward the center of the vehicle body is further provided in the step accommodating recessed portion, and the unlocking operation element is provided in the recessed portion.

The unlocking operation element is accommodated in the recessed portion and does not protrude from the recessed portion. Also when the step is used, there is no possibility that the unlocking operation element may be operated in error.
FIG. 1 is a perspective view of a motor driven vehicle according to the present invention.
FIG. 2 is an exploded perspective view of essential part of a vehicle body of the motor driven vehicle according to the present invention.
FIG. 3 is a perspective view of the motor driven vehicle as viewed from the rear.
FIG. 4 is a block diagram around a vehicle-carried battery.
FIG. 5 is a view showing an example of a modification of FIG. 4.
FIG. 6 is a left side elevational view of the motor driven vehicle.
FIG. 7 is a partial sectional view of a bottom portion of the vehicle body.
FIG. 8 is a view of operation of FIG. 7.
FIG. 9 is a sectional view taken along line 9-9 of FIG. 8.
FIG. 10 is a view of operation of FIG. 9.
FIG. 11 is a view showing another modification of FIG. 9.
FIG. 12 is a view showing a further modification of FIG. 9.

An embodiment of the present invention is described below with reference to the accompanying drawings. It is to be noted that the drawings should be viewed in the direction of reference symbols. The forward and rearward directions and the leftward and rightward directions are defined with reference to a driver.

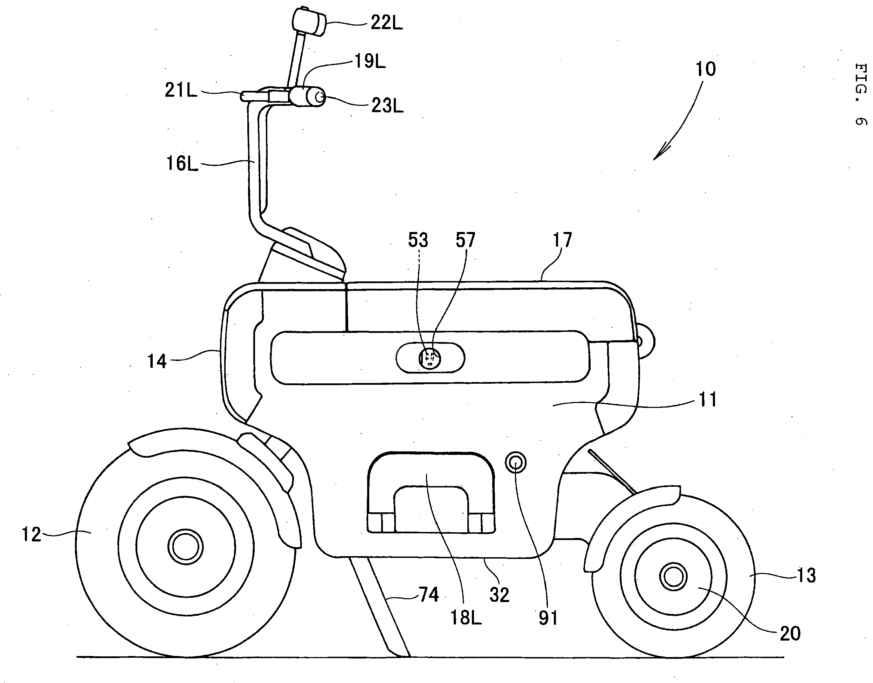

A characteristic structure of the present invention is described with reference to FIGS. 6 to 12. Prior to the description, a vehicle body structure to which the characteristic structure of the present invention can be applied more preferably is described with reference to FIGS. 1 to 5.

As shown in FIG. 1, the motor driven vehicle 10 includes a front wheel 12 and a rear wheel 13 provided on a vehicle body 11 of the box type, and includes a headlamp 14, a left front winker 15L (L is a suffix representing the left; this similarly applies also in the following description) and a right front winker 15R (R is a suffix representing the right; this similarly applies also in the following description) provided on the front face of the vehicle body 11. The motor driven vehicle 10 further includes handle posts 16L and 16R at a front portion of an upper face of the vehicle body 11 and includes a seat 17 at a rear portion of the upper face of the vehicle body 11. The motor driven vehicle 10 further includes foldable steps 18L and 18R on side faces of the vehicle body 11. The motor driven vehicle 10 is a motorcycle driven by an electric motor 20 built in the rear wheel 13.

For the convenience, the left step 18L is shown in an uprightly standing state (non-used state, accommodated state) while the right step 18R is shown in a folded down state (used state).

The driver can start the motor driven vehicle 10 to run by sitting on the seat 17 placing the feet on the foldable steps 18L and 18R, gripping a handle grip 19L at an upper portion of the left handle post 16L and gripping a handle grip 19R at an upper portion of the right handle post 16R and rotating the right handle grip 19R. When the motor driven vehicle 10 is running, the driver can brake by left and right brake levers 21L and 21R and visually observe rearwardly on left and right back mirrors 22L and 22R. Since side-marker lamps 23L and 23R are provided on the vehicle width outer sides of the handle grips 19L and 19R, the vehicle width is let recognized from the outside.

FIG. 2 is an exploded perspective view of essential part of the vehicle body 11. The vehicle body 11 includes, as principal components thereof, a central frame 25 disposed centrally in the vehicle widthwise direction, a left side frame 26 extending along the left side face of the central frame 25, and a right side frame 27 extending along the right side face of the central frame 25.

The central frame 25 is configured from a front wall portion 31, a bottom portion 32 and a rear wall portion 33 which configure a battery accommodating region 28, and a container 34 provided continuously rearwardly, relative to the vehicle, of the rear wall portion 33. The seat 17 can be attached for opening and closing movement to a rear portion of the container 34 through a hinge 35.

The seat 17 has, on a bottom face (lower face) thereof, a pocket portion 37 for removably accommodating a tablet type terminal 36 therein. A terminal portion 38 is provided at an end of the pocket portion 37 and can electrically connect the tablet type terminal 36 on the vehicle body side. This tablet type terminal 36 can serve also as a vehicle-carried computer when the vehicle is running (details are hereinafter described). When the vehicle is not running, by opening the seat 17 and erecting the tablet type terminal 36 uprightly as seen in the figure, the driver can enjoy an image and a game similarly to that on a television receiver. Or, the tablet type terminal 36 can be utilized as a network information acquiring tool as a personal computer.

In the battery accommodating region 28, a plurality of leg accommodating recessed portions 39 are provided on the bottom portion 32 and communicated with each other by a communicating groove 41. A vehicle body side power supply terminal 42 is disposed in a region surrounded by the leg accommodating recessed portions 39.

A vertically elongated recessed guide portion 43 is provided on the rear wall portion 33. Although a recessed guide portion is provided also on the front wall portion 31, the recessed guide portion of the front wall portion 31 is not shown for the convenience of illustration.

In addition, a locking mechanism 44 is attached to the rear wall portion 33. An operating element 45 for the locking mechanism 44 extends into the container 34. Preferably, the operating element 45 is disposed rather near to the right end or the left end of the container 34. By this arrangement, there is no possibility that the operating element 45 may make an obstacle when a small article is placed into or out of the container 34.

A vehicle-carried battery 50 is a comparatively simple hexahedron and has a grip 51 on an upper face 50a thereof; has vertically elongated projections 52 on a front face 50b and a rear face 50c thereof; has a charging portion 53 on a left side face 50d thereof; has discharging portions 54 and 55 on a right side face 50e thereof; and has a battery side power supply terminal 56 on a lower face 50f thereof.

By fitting the projections 52 into the recessed guide portions 43 and moving down the vehicle-carried battery 50, the vehicle-carried battery 50 can be smoothly accommodated into the battery accommodating region 28. By the fitting between the projections 52 and the recessed guide portions 43, the battery side power supply terminal 56 can be fitted into the vehicle body side power supply terminal 42 without deflection. Similarly, by the fitting between the projections 52 and the recessed guide portions 43, the vehicle-carried battery 50 can be pulled up without deflection.

The projections 52 may be changed to recesses. In this instance, the recessed guide portions 43 may be changed to projecting guide portions.

On the left side frame 26, a charging side opening 57 is provided at a position corresponding to the charging portion 53 of the vehicle-carried battery 50.

On the right side frame 27, discharging side openings 58, 58 are provided at positions corresponding to the discharging portions 54 and 55 of the vehicle-carried battery 50.

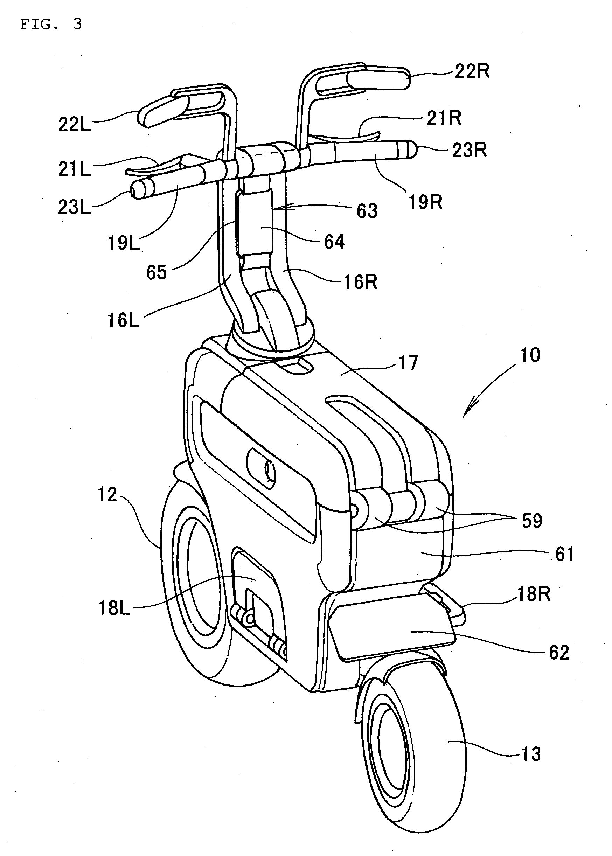

FIG. 3 is a perspective view of the motor driven vehicle 10 as viewed from rearwardly. The motor driven vehicle 10 includes rollers 59, 59 on a rear face of the vehicle body 11 and further includes a tail lamp unit 61 and a license plate 62 below the rollers 59, 59.

Further, the motor driven vehicle 10 includes a portable terminal 63 between the left and right handle posts 16L and 16R. This portable terminal 63 is configured from a display section 64 which carries out display of a vehicle speed and a direction indication and display of a power storage amount and other states, and a terminal main body 65 in which an arithmetic operation circuit and a memory are built. In other words, the motor driven vehicle 10 does not fixedly have a meter unit, and instead, the portable terminal 63 substitutes for the meter unit.

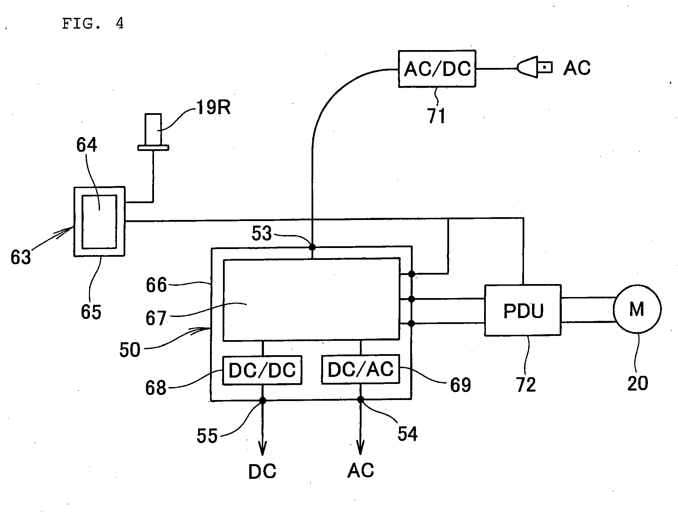

As shown in FIG. 4, the vehicle-carried battery 50 includes a battery main body 67 built in a battery case 66 and further includes transformers 68 and 69 built in the battery case 66. The transformer 68 is a DC/DC converter for transforming dc current into dc current of a different voltage, and the other transformer 69 is a DC/AC inverter for converting, for example, dc current of 12 V into ac current of 100 V.

When the motor driven vehicle 10 is not running, predetermined dc current (for example, DC 24 V) is supplied from a commercial power supply (AC 100 V, 110 V, 200 V, 220 V and so forth) to the charging portion 53 through a charger 71 to carry out charging.

When the motor driven vehicle 10 is running, power is supplied from the charging portion 53 to the electric motor 20 through a driving circuit 72 to carry out running. Thereupon, the amount of rotation of the right handle grip 19R is detected by a sensor and the information is sent to the portable terminal 63 so that the driving circuit 72 may be controlled by an instruction of the portable terminal 63 to adjust the running speed. It is to be noted that the information of rotation of the right handle grip 19R may be directly sent to the driving circuit 72.

When the motor driven vehicle 10 is not running, for example, upon outdoor camping, the vehicle-carried battery 50 can be used as a power supply. In particular, the discharging portion 54 can be used to receive supply of AC 100 V (or AC 110 V) so as to be used for a rice cooker or for illumination.

Further, the other discharging portion 55 can be used to receive supply of DC 12 V so as to be used for a personal computer.

The vehicle-carried battery 50 not only can receive supply of power while it is accommodated in the vehicle body but also can receive supply of power also in a state in which it is removed from the vehicle body, that is, by the vehicle-carried battery 50 by itself.

Further, a power supply system a indicated by an imaginary line is extended from the transformer 68 and electrically connected to the portable terminal 63 so that power is supplied to the portable terminal 63 normally or at any time. This can prevent decrease of the remaining electric amount of the built-in battery built in the portable terminal 63.

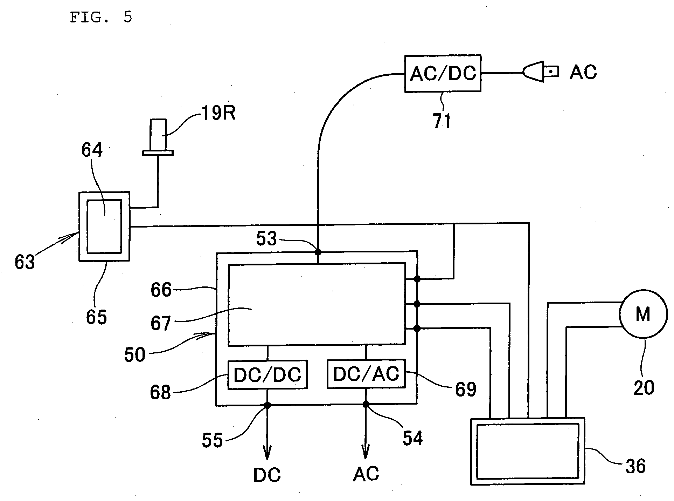

FIG. 5 is a view showing an example of an alteration of FIG. 4. The driving circuit 72 in FIG. 4 is replaced by the tablet type terminal 36. Since the other part is same as that in FIG. 4, the reference symbols are diverted while detailed description of them is omitted.

A power supply system b indicated by an imaginary line is extended from the transformer 69 and electrically connected to the tablet type terminal 36 so that power is supplied to the tablet type terminal 36 normally or at any time. This can prevent decrease of the remaining electric amount of the built-in battery built in the tablet type terminal 36.

In the case where the motor driven vehicle 10 includes one front wheel 12 and one rear wheel 13 as shown in FIG. 6, it is necessary to prevent the vehicle body 11 from falling to the left or right in the vehicle widthwise direction (in the drawing, in the front and back direction) by means of a stand 74.

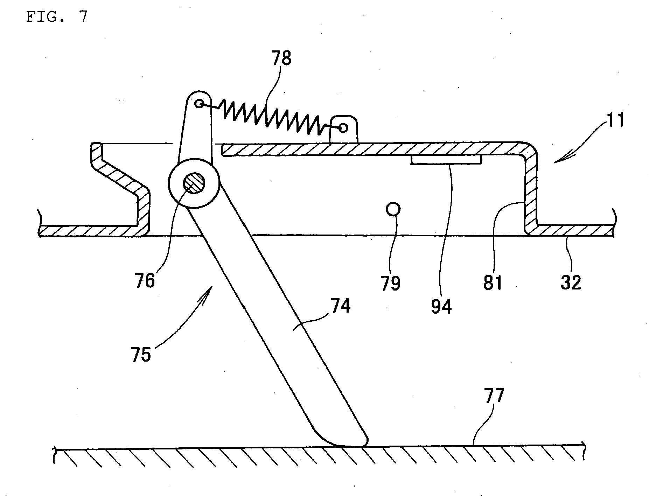

As shown in FIG. 7, a parking apparatus 75 includes the stand 74 attached for rocking motion on the bottom portion 32 of the vehicle body 11 by a pin 76, a tension spring 78 extending between the stand 74 and the bottom portion 32 of the vehicle body 11 in order to pivot the stand 74 in a direction in which the stand 74 contacts with a road surface 77, and a stand lock pin 79 provided on the bottom portion 32 of the vehicle body 11 for keeping the stand 74 at a predetermined position while the vehicle is running or in a like case. The stand lock pin 79 is a principal component of a stand lock mechanism for locking the stand 74 at the predetermined position.

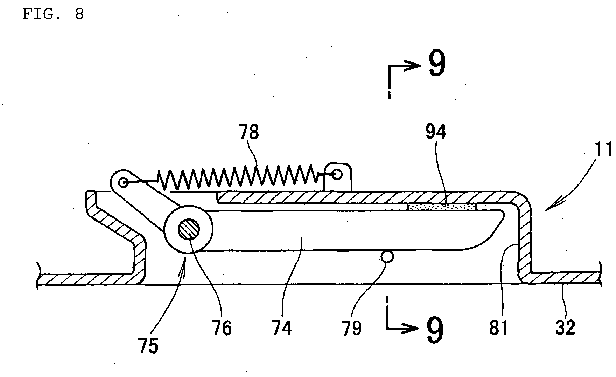

As shown in FIG. 8, the stand 74 is held by the stand lock pin 79 so as not to move down while the vehicle is running or in a like case.

A recessed portion 81 which cannot be visually observed as viewed in side elevation of the vehicle is provided in an upwardly recessed state on the bottom portion 32 of the vehicle body 11. While the vehicle is running, the stand 74 is accommodated in the recessed portion 81 and cannot be watched from the outside.

In comparison with an existing vehicle whose stand is exposed even in an accommodated state thereof, according to the present embodiment, since the stand 74 is accommodated fully in the recessed portion 81 and cannot be watched as viewed in side elevation of the vehicle, the outer appearance of the vehicle can be improved.

Further, since there is no possibility that a projection on the road may directly contact with the stand 74, there is no necessity to make the stand 74 more rigid than necessary.

A structure of a stand lock mechanism and an unlocking mechanism for canceling the lock is described below.

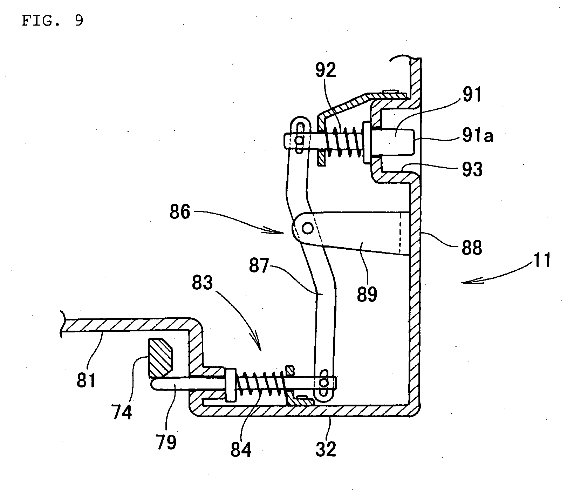

As shown in FIG. 9, the stand lock mechanism 83 includes the stand lock pin 79 provided for horizontal movement on the bottom portion 32 of the vehicle body 11, and a compression spring 84 for biasing the stand lock pin 79 such that an end of the stand lock pin 79 is advanced into the recessed portion 81. The stand lock pin 79 biased by the compression spring 84 contacts with the lower face of the stand 74 to prevent downward movement of the stand 74.

The unlocking mechanism 86 includes a link 87 connected at a lower end thereof to the stand lock pin 79 and extending upwardly, a stay 89 for supporting an upper portion of the link 87 for rocking motion on a side face 88 of the vehicle body 11, an unlocking operation element 91 in the form of a pushbutton connected to an upper end of the link 87 and attached for horizontal movement on the side face 88 such that it extends through the side face 88 of the vehicle body 11, and a compression spring 92 for biasing the unlocking operation element 91 toward the outside of the vehicle body.

A head 91a of the unlocking operation element 91 may be projected to the outside from the side face 88. However, if the head 91a of the unlocking operation element 91 is exposed, then the outer appearance is degraded. In addition, the unlocking operation element 91 is likely to be operated in error.

Therefore, in the present example, an inwardly recessed portion 93 is provided on the side face 88, and the head 91a of the unlocking operation element 91 is accommodated in the recessed portion 93. As a result, the head 91a of the unlocking operation element 91 is sunk in the side face 88, and the outer appearance is improved and the possibility of operation in error is eliminated.

If the head 91a of the unlocking operation element 91 is pushed manually, then the link 87 is pivoted in the counterclockwise direction in the figure, and the stand lock pin 79 is pulled and the stand 74 in the accommodated position drops. As a result, FIG. 7 is obtained.

In order to accommodate the stand 74, the stand 74 of FIG. 7 is lifted manually.

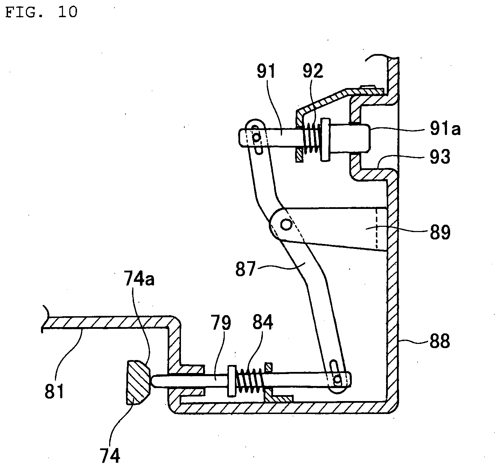

Consequently, in FIG. 10, an inclined face portion 74a provided at a corner between the upper face and the outer face of the stand 74 pushes the stand lock pin 79 to retract the stand lock pin 79 against the compression spring 84. If the stand 74 is further lifted, then the stand 74 is positioned higher than the stand lock pin 79. Consequently, the stand lock pin 79 is advanced by an action of the compression spring 84, and a stand lock state of FIG. 9 is obtained. It is to be noted that, in FIG. 8, preferably a cushion member 94 formed from a rubber plate or a soft resin plate is adhered to the recessed portion 81 so that the impact of the stand 74 may be moderated.

The unlocking operation element 91 is disposed at a position spaced rearwardly of the vehicle from the step 18L as shown in FIG. 6. The presence of the unlocking operation element 91 becomes clearer. On the other hand, the unlocking operation element 91 becomes liable to be operated in error including an operation by mischief. Two countermeasure examples are described below.

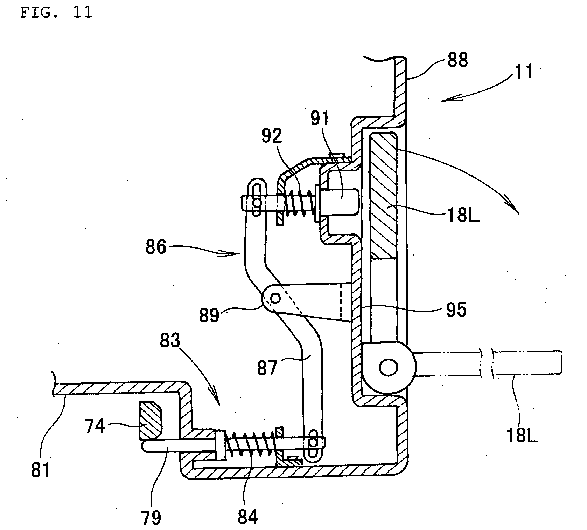

As shown in FIG. 11, a step accommodating recessed portion 95 for accommodating the step 18L therein is provided on the side face 88 of the vehicle body 11, and the step 18L for receiving a foot of a driver placed thereon is removably accommodated in the step accommodating recessed portion 95. Further, the unlocking operation element 91 is provided at a region in the step accommodating recessed portion 95 which is hidden by the step 18L in an accommodated state. The configuration of the other part is same as that of FIG. 10, and the reference symbols are used commonly and description of the same is omitted.

Since the unlocking operation element 91 is disposed at a position at which it cannot be noticed readily (cannot be watched readily), it is less likely to be operated by mischief.

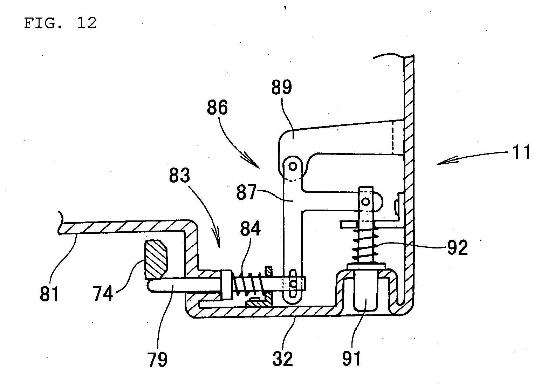

As shown in FIG. 12, the unlocking operation element 91 is provided on the bottom portion 32 of the vehicle body 11 such that it extends upwardly and downwardly. The head 91a of the unlocking operation element 91 is operated from below. The configuration of the other part is same as that of FIG. 10, and the reference symbols are used commonly and description of the same is omitted.

Since the unlocking operation element 91 is disposed at a position at which it cannot be noticed readily, it is less likely to be operated by mischief.

It is to be noted that, while the present invention is applied, in the embodiment, to a motorcycle, it can be applied also to a motor-driven three-wheeled vehicle and may be applied to general motor driven vehicles.

The present invention is suitably applied to a motorcycle.

10 ...Motor driven vehicle, 18L, 18R ... Step, 20 ... Electric motor, 50 ... Vehicle-carried battery, 74 ... Stand, 81 ... Recessed portion for accommodating the stand, 83 ... Stand lock mechanism, 88 ... Side face of the vehicle body, 91 ... Unlocking operation element, 95 ... Step accommodating recessed portion.

## Claims

1. A motor driven vehicle (10) which has a stand (74) for supporting a vehicle body (11) upon parking and runs using an electric motor (20), to which power is supplied from a vehicle-carried battery (50), as a driving source, wherein:
a recessed portion (81) which is recessed upwardly and cannot be watched as viewed in side elevation of the vehicle is provided on a bottom portion (32) of said vehicle body (11);
said stand (74) is removably accommodated in said recessed portion (81);
a stand lock mechanism (83) for locking said stand (74) such that said stand (74) keeps an accommodated posture is provided on said vehicle body (11); andan unlocking operation element (91) for cancelling the lock by said stand lock mechanism (83) is provided on said vehicle body (11);
**characterized by**
a tension spring (78) biasing the stand (74) such that the stand (74) drops from its accommodated position upon operation of the unlocking operation element (91), wherein
a step accommodating recessed portion (95) which is recessed toward the center of said vehicle body (11) is provided on a side face (88) of said vehicle body (11);
a step (18L, 18R) on which a driver is to place a foot thereof is removably accommodated in said step accommodating recessed portion (95); and
said unlocking operation element (91) is provided in a region in said step accommodating recessed portion (95) which is hidden by said step (18L, 18R) in the accommodated state.

2. The motor driven vehicle according to claim 1, wherein
said unlocking operation element (91) is provided on a side face (88) of said vehicle body (11).

3. The motor driven vehicle according to claim 1, wherein
said unlocking operation element (91) is provided at the bottom portion (32) of said vehicle body (11).

4. The motor driven vehicle according to claim 1, wherein:
a recessed portion (93) which is recessed toward the center of said vehicle body (11) is further provided in said step accommodating recessed portion (95); and said unlocking operation element (91) is provided in said recessed portion (93).

## Patentansprüche

1. Motorangetriebenes Fahrzeug (10), welches einen Ständer (74) hat um die Fahrzeugkarosserie (11) beim Parken zu stützen und welches unter Verwendung eines Elektromotors (20) als eine Antriebsquelle fährt, dem Energie aus einer fahrzeuggetragenen Batterie (50) zugeführt wird, wobei:
ein ausgesparter Abschnitt (81), welcher nach oben ausgenspart ist und der nicht in einer Seitenansicht des Fahrzeugs gesehen werden kann, an einem untersten Abschnitt (32) der Fahrzeugkarosserie (11) vorgesehen ist;
der Ständer (74) herausklappbar in dem ausgesparten Abschnitt (81) aufgenommen ist;
ein Ständersperrmechanismus (83) zum Sperren des Ständers (74), sodass der Ständer (74) in der Aufbewahrungslage bleibt, an der Fahrzeugkarosserie (11) vorgesehen ist; und ein Sperrbedienungselement (91) zum Beenden der Sperrung durch den Ständersperrmechanismus (83) an der Fahrzeugkarosserie (11) vorgesehen ist;
**gekennzeichnet durch**
eine Zugfeder (78), die den Ständer (74) so vorspannt, dass der Ständer (74) aus seiner Aufbewahrungsposition nach Betätigung des Entsperrbedienelements (91) herausfällt, wobei
ein Fußrastenaufbewahrungs-Aussparungsabschnitt (95), der auf eine Mitte der Fahrzeugkarosserie (11) zu ausgespart ist, an einer Seitenfläche (88) der Fahrzeugkarosserie (11) vorgesehen ist;
eine Fußraste (18L, 18R), auf der ein Fahrer seinen Fuß platzieren kann, einklappbar in den Fußrastenaufbewahrungs-Aussparungsabschnitt (95) aufgenommen ist; und
das Entsperrbedienelement (91) in einem Bereich in dem Fußrastenaufbewahrungs-Aussparungsabschnitt (95) vorgesehen ist, der durch die Fußraste (18L, 18R) in dem aufgenommenen Zustand verdeckt wird.

2. Motorangetriebenes Fahrzeug gemäß Anspruch 1, wobei das Entsperrbedienelement (91) an einer Seitenfläche (88) der Fahrzeugkarosserie (11) vorgesehen ist.

3. Motorangetriebenes Fahrzeug gemäß Anspruch 1, wobei das Entsperrbedienelement (91) an dem untersten Abschnitt (32) der Fahrzeugkarosserie (11) vorgesehen ist.

4. Motorangetriebenes Fahrzeug gemäß Anspruch 1, wobei:
weiterhin ein ausgesparter Abschnitt (93), der auf die Mitte der Fahrzeugkarosserie (11) zu ausgespart ist, in dem Fußrastenaufbewahrungs-Aussparungsabschnitt Abschnitt (95) vorgesehen ist und das Entsperrbedienelement (91) in dem ausgesparten Abschnitt (93) vorgesehen ist.

## Revendications

1. Véhicule entraîné par moteur (10) qui a une béquille (74) pour supporter une carrosserie de véhicule (11) suite au stationnement et circule à l'aide d'un moteur électrique (20), auquel la puissance est fournie par une batterie (50) portée par le véhicule, en tant que source d'entraînement, dans lequel :
une partie évidée (81) qui est évidée vers le haut et ne peut pas être vue, lorsqu'elle est observée sur une élévation latérale du véhicule, est prévue sur une partie inférieure (32) de ladite carrosserie de véhicule (11) ;
ladite béquille (74) est logée, de manière amovible, dans ladite partie évidée (81) ;
un mécanisme de verrouillage de béquille (83) pour verrouiller ladite béquille (74), de sorte que ladite béquille (74) maintient une posture logée, est prévu sur ladite carrosserie de véhicule (11) ; et un élément d'actionnement de déverrouillage (91) pour annuler le verrouillage par ledit mécanisme de verrouillage de béquille (83) est prévu sur ladite carrosserie de véhicule (11) ;
**caractérisé par** :
un ressort de tension (78) sollicitant la béquille (74) de sorte que la béquille (74) tombe de sa position logée suite à l'actionnement de l'élément d'actionnement de déverrouillage (91), dans lequel :
une partie évidée logeant un repose-pied (95) qui est évidée vers le centre de ladite carrosserie de véhicule (11) est prévue sur une face latérale (88) de ladite carrosserie de véhicule (11) ;
un repose-pied (18L, 18R) sur lequel un conducteur doit placer son pied, est logé de manière amovible dans ladite partie évidée de logement de repose-pied (95) ; et
ledit élément d'actionnement de déverrouillage (91) est prévu dans une région dans ladite partie évidée de logement de repose-pied (95) qui est dissimulée par ledit repose-pied (18L, 18R) à l'état logé.

2. Véhicule entraîné par moteur selon la revendication 1, dans lequel :
ledit élément d'actionnement de déverrouillage (91) est prévu sur une face latérale (88) de ladite carrosserie de véhicule (11).

3. Véhicule entraîné par moteur selon la revendication 1, dans lequel :
ledit élément d'actionnement de déverrouillage (91) est prévu au niveau de la partie inférieure (32) dudit corps de véhicule (11).

4. Véhicule entraîné par moteur selon la revendication 1, dans lequel :
une partie évidée (93) qui est évidée vers le centre de ladite carrosserie de véhicule (11), est en outre prévue dans ladite partie évidée de logement de repose-pied (95) ; et ledit élément d'actionnement de déverrouillage (91) est prévu dans ladite partie évidée (93).
